# EUROPÄISCHE PATENTANMELDUNG

(11) **EP 0 779 608 A2**
(43) Veröffentlichungstag der Anmeldung: **18.06.1997**
(21) Anmeldenummer: 96120153.0
(22) Anmeldetag: 16.12.1996
(51) Int. Cl.: G09G 5/14, G09G 1/16

(54) **Mehrfachoverlay mit einem Overlaycontroller**

(30) Priorität: 15.12.1995 DE 19546841
(71) Anmelder: SICAN, GESELLSCHAFT FÜR SILIZIUM-ANWENDUNGEN UND CAD/CAT NIEDERSACHSEN mbH, D-30419 Hannover (DE)
(72) Erfinder: Altmann, Jens, 36469 Tiefenort (DE); Linder, Mathias, 30451 Hannover (DE); Göhring, Thomas, 07743 Jena (DE); Naumann, Hardo, 30449 Hannover (DE)

(57) **Zusammenfassung**

**2.1.** Herkömmliche Overlay-Controller zur Videoeinblendung auf dem Monitor eines Computers verwalten Videodaten für ein einziges Fenster. Zur simultanen Einblendung mehrerer Videos ist daher bislang eine Kaskadierung mehrerer Overlay-Controller erforderlich, was einen hohen Hardwareaufwand mit sich bringt. Dies ist zu teuer und benötigt zu viel Einbauplatz. Aufgabe der Erfindung war es daher, mit einem Overlay-Controller simultan mehrere Videos jeweils eines Videokanals auf einem Monitor an jeweils festgelegten Einblendepositionen einzublenden.
**2.2.** In dem Verfahren und der Schaltungsanordnung wird jedes einzublendende Video in Sequenzen unterteilt, die Videosequenzen werden nacheinander alternierend aus den verschiedenen Videokanälen in den Overlay-Controller (OVL) geleitet (MUX) und der Overlay-Controller (OVL) wird für jede Sequenz eines Videos auf die entsprechenden Koordinaten der jeweiligen Einblendeposition umgeschaltet.
**2.3.** Die Erfindung findet Anwendung für Videoeinblendungen insbesondere bei Videokonferenzlösungen.

## Beschreibung

Die Erfindung betrifft einen Mehrfachoverlay mit einem Overlaycontroller. Herkömmlicherweise werden auf dem Monitor eines Computers, z.B. PC oder Workstation, Fenster erzeugt, in denen jeweils Anwendungsprogramme ablaufen. Diese Fenster werden auch Windows genannt. Für zahlreiche Multimedia-Anwendungen wird eines der Fenster dazu verwendet, um Videodaten, insbesondere Bewegtvideobilder, aus einem Videokanal einzublenden.

Die Einblendung von Videodaten auf einem Monitor ist auch für Konferenzsysteme erforderlich, bei denen die Computer mehrerer Teilnehmer miteinander verbunden sind. Auf dem Monitor der Teilnehmer erscheinen dann Fenster mit Videos bzw. Anwendungsprogrammen, die von jedem Teilnehmer gleichzeitig eingesehen bzw. bedient werden können. Dadurch ist trotz räumlicher Entfernung ein simultanes Arbeiten in nur einem Dokument möglich.

Die Einblendung von Videos wird vorzugsweise nicht direkt über den Computer und der darin befindlichen Graphikkarte durchgeführt, da die dabei auftretenden großen Datenmengen den Computer zu stark auslasten würden. Daher wird die sogenannte Overlay-Technik eingesetzt, bei der das Videosignal direkt in das Graphiksignal (z.B. VGA-Signal) eingeblendet wird, ohne dabei Rechnerleistung zu beanspruchen . Für dieses Verfahren sind Overlaykarten bekannt, die in die verfügbaren Slots des Computers eingesteckt werden. Die Overlaykarte fungiert dabei als "Slave" der Graphikkarte und synchronisiert das Video auf das Graphiksignal der Graphikkarte in bezug auf die Bildfrequenz, die Auflösung und die Vollbilder. Das Videosignal wird dann in ein Fenster eingeprägt und das so gemischte Signal am Monitor des Computers dargestellt. Da der Rechner von den anfallenden Datenmengen nicht belastet wird, kann das Videosignal in Echtzeit und mit den richtigen Farben (True Color) dargestellt werden. Professionelle Anwendungen sind Videoüberwachungen oder POI-Systeme (Point-of-Information). Im semiprofessionellen und Consumerbereich geht es um die Darstellung von Live-Videos und deren Nachbearbeitung. Eine Marktübersicht der Overlaykarten findet sich in "c't, 1993, Heft. 7, Seite 132-136. In dem Artikel werden entsprechende Karten der Firmen Miro, FAST-Computer, Intel und VideoLogic beschrieben.

Es ist auch möglich, die Fenster nicht direkt auf dem Monitor darzustellen, sondern auf einem Speichermedium abzuspeichern, um sie anschließend weiterzubearbeiten.

Damit die großen Datenmengen, die insbesondere bei Bilddaten auftreten, mit herkömmlicher Rechenleistung und wirtschaftlichem Hardwareaufwand mit möglichst wenig Speichermodulen verarbeitet werden können, werden die Daten komprimiert. Hierzu werden vor allem Methoden, die im JPEG- und MPEG-Standard als Norm international festgelegt sind, als Soft- und Hardwarelösungen verwendet. Zur Darstellung von Bilddaten wird der jeweilige Bilddatenstrom aus einem Zwischenspeicher ausgelesen, dekomprimiert und in den sogenannten "Overlay-Controller" geleitet. Der Overlay-Controller dient dazu, das Format des darzustellenden Videos auf das Fensterformat des Monitors umzurechnen.

In der JP 07075034 A ist eine Schaltungsanordnung zur Einblendung einer Anzahl von Videos auf einem Anzeigegerät unter Verwendung eines Empfängers und einer Eingabeeinheit dargestellt. Da ein Overlay-Controller nur in der Lage ist, einen einzigen Datenstrom zu verarbeiten, ist die Schaltungsanordnung nicht dazu geeignet, digitale Videos unter Verwendung eines einzigen Overlay-Controllers auf einem Monitor einer DV-Anlage einzublenden.

In der EP-0 357 813 A1 ist ein Verfahren zur Einblendung eines ersten Videos (Video 1) in ein zweites Video (Video 2) beschrieben. Das erste Video (Video 1) wird zwischengespeichert (FM) und mit einer Markierung für die Einblendeposition versehen. Hierzu dient eine Steuereinrichtung (SI), die jedoch kein Overlay-Controller ist. Entsprechend der Markierung werden die Bilddaten sequentiell aufeinanderfolgend in einen Videokanal geleitet, wobei die Bilder vor dem Einleiten der Bilddaten in den Videokanal positioniert werden. Pro Video ist daher eine eigene Steuereinrichtung (SI) bzw: ein eigener Overlay-Controller erforderlich.

In DE-OS 36 40 129 ist eine Schaltung zur Einblendung mehrerer Videos auf einem Monitor dargestellt, die ebenfalls keinen Overlay-Controller verwendet. Für jede Videoeinblendung sind eigene Videospeicher, separate Eingangsschalter usw. vorgesehen, so daß die Bildverarbeitung parallel erfolgt. Dies verursacht einen relativ hohen Hardwareaufwand. Außerdem kann die Schaltung nicht flexibel auf eine größere Anzahl von Videos angepaßt werden. Vielmehr ist die Anzahl von Videos durch die Anzahl der Videospeicher festgelegt. Auf dem Übertragungsweg vom Sender zum Empfänger ist für jeden Videokanal ein eigener physikalischer Übertragungskanal vorgesehen, so daß die Übertragungsbandbreite relativ groß ist.

Den herkömmlichen Karten ist gemeinsam, daß sie Videodaten für ein einziges Fenster verwalten. Das bedeutet, daß für jeden darzustellenden, jeweils voneinander unabhängigen Videodatenstrom, d.h. für jede Videoanwendung, eine eigene Karte erforderlich ist. Diese Eigenschaft ist unter dem Begriff "Einfach-Overlay" bekannt.

Für Videokonferenzlösungen genügt jedoch nicht das heute übliche Einfach-Overlay, da mehrere Einblendungen gleichzeitig zu sehen sein sollen. Bisher war dazu eine Kaskadierung von mehreren konventionellen Overlay-Controller erforderlich. Unter Kaskadierung ist in diesem Zusammenhang zu verstehen, daß mehrere gleichartige Karten in parallelen Einsteckplätzen eines Computers betrieben werden. Die Firma FAST-Computer bietet eine entsprechende Lösung auf dem Markt an. Da mehrere Karten erforderlich sind, bringt diese Lösung allerdings einen hohen Hardwareaufwand mit sich. Sie ist deshalb zu teuer und benötigt zu viel Einbauplatz in einem Computersystem.

### Aufgabe

Aufgabe der Erfindung war es daher, mit einem einzigen Overlay-Controller simultan mehrere Videos jeweils eines Videokanals auf einem Monitor an Einblendepositionen einzublenden, die für jedes Video jeweils festgelegt sind, so daß die Videos gleichzeitig sichtbar sind.

### Erfindung

Die Aufgabe wird durch das Verfahren nach Anspruch 1 und durch die Schaltungsanordnung nach Anspruch 4 gelöst.

Es werden dabei jeweils Sequenzen eines einzublendenden Videos nacheinander ausgelesen, so daß Teile des ersten, zweiten, dritten ... Videos des ersten, zweiten, dritten ... Videokanals alternierend übertragen werden. Bei der Darstellung jedes einzelnen Videos wird die Overlay-Hardware in der vertikalen Austastlücke auf die zur entsprechenden Sequenz passenden Koordinaten der Einblendeposition umgeschaltet. So werden mehrere logische Videokanäle im Multiplexbetrieb über nur einen einmal vorhandenen physikalischen Videokanal dargestellt. Dabei werden ggf. nicht nur der Overlaycontroller (OVL) mit seinem Video-RAM (VRAM), sondern auch der zugehörige Videodekoder (DEC, z.B. M-JPEG) und weitere Hardwarekomponenten (FIFOs, Treiber, ...) mehrfach ausgenutzt.

In einer bevorzugten Ausführungsform werden die Sequenzen der mehreren einzublendenden Videos nacheinander ausgelesen, wobei die Sequenzen jeweils einem Halbbild entsprechen.

Die aufgrund der alternierenden Übertragung der Videosequenzen sinkende Bildwiederholfrequenz kann ausgeglichen werden, indem die Bilddatenverarbeitung in dem Overlay-Controller mit einem erhöhtem Takt durchgeführt wird.

### Ausführungsbeispiel

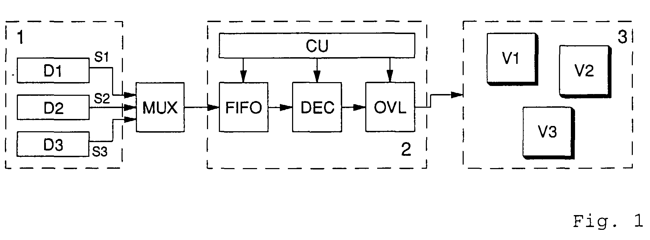

Figur 1 zeigt als Blockschaltbild die erfindungsgemäße Schaltungsanordnung am Beispiel von Videodaten, die decodiert in einem Speicher (1) abgelegt sind. Es sind drei Videokanäle vorhanden, die drei voneinander unabhängige Videos D1 bis D3 umfassen. Die Videokanäle können z.B. Fernsehkanäle oder Kameraaufnahmen verschiedener Teilnehmer einer Konferenzschaltung sein.

Es wird alternierend jeweils eine Sequenz eines Videos D1, D2 und D3 aus den verschiedenen Videokanälen (K1, K2, K3) aus dem Speicher (1) ausgelesen. Dies kann z.B. ein Halbbild von D1, D2 und anschließend von D3 sein. Bei der nach dem erfindungsgemäßen Prinzip aufgebauten Lösung werden die im Bildspeicher (1) vorliegenden Videodatenströme gemultiplext und in den einen physikalischen Videokanal (2) eingespeist. Das Multiplexen der Videodatenströme kann durch Softwaresteuerung, aber auch mittels Hardware erfolgen. Als Pufferstation ist in dem Videokanal (2) ein FIFO-Speicher (FIFO) vorgesehen. Anschließend werden die Daten decodiert (DEC). Durch synchrone Steuerung des Overlay-Controller (OVL) erfolgt die Einblendung der Videodaten an die jeweils gewünschten Koordinaten in ein VRAM (3) oder auf einen Monitor (3). Die Einblendung des Inhalts des VRAMs (3) in das VGA-Signal eines Monitors erfolgt in der bei der Video-Overlaytechnik üblichen Weise.

Um das für diese Lösung benötigte schnelle, zeitgenaue Umprogrammieren des Overlay-Controllers (OVL) und die dazu passende synchrone Bedienung der anderen Systemkomponenten zu gewährleisten, wird ein eigener lokaler Mikrocontroller (CU) zur Ablaufsteuerung eingesetzt.

Falls die Pixelzahl des VRAMs (3) zur Überdeckung des gesamten PC-Monitorbildes nicht genügen sollte, kann mit herkömmlichen Overlay-Controllern (OVL) ein geeigneter Zoom-Faktor eingestellt werden.

Durch das Multiplexen sinkt die Bildwiederholfrequenz, auch Refreshing-Frequenz genannt, je Video bei n dargestellten logischen Videokanälen auf 1/n der ursprünglichen Frequenz. Bei typischen PAL-Videoströmen mit 4-fach Overlay sinkt die Bildwiederholfrequenz z.B. von 50 auf 12,5 Hz. Zum Ausgleich wird in diesem Fall die Dekoder- und Overlayhardware (DEC + OVL) vom 50 Hz-Betrieb auf einen 100 Hz Betrieb hochgetaktet. Damit ist dann ein 4-fach-Overlay mit CIF-Auflösung bei einer 25 Hz Refresh-Rate möglich.

Diese Einschränkung der Auflösung kommt für den Anwender jedoch nicht zum Tragen, weil durch die begrenzte Fläche eines PC-Monitors ohnehin nur maximal ein Video in voller Auflösung dargestellt werden kann. Hierfür kann der Overlay-Controller (OVL) auf den Single-Mode umgeschaltet werden, wobei nur ein Videokanal übertragen werden kann. Erst bei Betrieb des logischen Mehrfachoverlays (Multi-Mode) wird die Auflösung und Bildfrequenz bei 4-fach Betrieb auf CIF/25 Hz reduziert. Für die Darstellung der 4 Videos ist auf dem PC-Monitor dann aber sowieso nicht mehr Platz als für CIF-Auflösung vorhanden. Somit ist nur minimale Hardware erforderlich.

Als Overlay-Controller (OVL) eignet sich z.B. der "Video and Memory Controller (plus)" SAA 7195A der Firma Philips Semiconductors, Hamburg, auf dessen Spezifikation verwiesen wird. In diesem Bauteil ist die gesamte Kontrollogik für die Konversion der Videoabtastrate (Line-Progressive-Scan und Frame-Rate-Conversion), für die Positionierung und Anpassung des Fensters (Window-positioning und -panning) und zur Skalierung des Videos auf dem Monitor integriert. Außerdem ermöglicht es, das Video mit den anderen, auf dem Monitor dargestellten Bildelementen, z.B. Fenstern, zu verbinden.

Die vom Overlay-Controller (OVL) beschriebenen Bereiche des VRAMs (3) werden über Rechtecke definiert. Dann muß vermieden werden, daß Videos (D1-D3) der verschiedenen Kanäle nicht übereinander liegen, da dann der Schnittbereich der Videos abwechselnd von dem einen und dem anderen Videodatenstrom überschrieben werden würde. Dann würde im Überlappungsbereich der beiden Videos ein Flimmern auftreten. Dies läßt sich wiederum verhindern, indem die Videos aus Teilrechtecken zusammengesetzt werden, die für sich jeweils nicht durch andere Teilrechtecke überdeckt werden. Jede Fensterkonfiguration von rechteckigen Fenstern läßt sich durch eine Liste derartiger Rechtecke darstellen. Allerdings wird bei dieser Betriebsweise ggf. die Bildwiederholfrequenz (Refresh-Rate) stark reduziert, da pro Zeitscheibe (ein Halbbild) immer nur ein Teilrechteck erneuert (refresht) werden kann. Es sollte daher bevorzugt von sich gegenseitig nicht überlappenden Videofenstern ausgegangen werden und die Definition von Teilrechtecken optional vorgesehen werden.

Die Videos (D1-D3) der verschiedenen Videokanäle müssen beim Mehrfachoverlay in einem virtuellen Rahmen liegen, der durch die Größe des VRAMs (3) vorgegeben wird. Mit üblichen Overlay-Controllern (OVL), die nach dem erfindungsgemäßen Prinzip betrieben werden, kann das VRAM (3) ohne weitere Maßnahmen einen Bereich von ca. 830 * 630 Bildpunkten überdecken. Die Fenster (Windows) des Mehrfachoverlays müssen sich also auf diesen Bereich beschränken, wobei die Lage des virtuellen Rahmens frei gewählt werden kann.

Falls die Pixelzahl des VRAMs (3) zur Überdeckung des gesamten PC-Monitorbildes in der gewählten VGA-Auflösung nicht genügen sollte, kann mit dem Overlay-Controller (OVL) ein geeigneter. Zoom-Faktor eingestellt werden. Damit kann dann auch bei größeren VGA-Auflösungen eine volle Überdeckung des PC-Monitors durch den virtuellen Rahmen des Mehrfachoverlays erreicht werden. Allerdings wird durch den Zoom-Faktor die absolute Auflösung des Videos entsprechend reduziert.

Wahlweise kann die Steuerungssoftware auf die höhere Auflösung zurückschalten, sobald wieder alle Mehrfachoverlay-Fenster in dem kleineren virtuellen Rahmen zu liegen kommen. In der bevorzugten Grundeinstellung beim Mehrfachoverlay wird von einer nicht gezoomten VRAM-Überdeckungsfläche ausgegangen. In der Bedienoberfläche werden die Videos durch Windows-Fensterrahmen eingeschlossen. Diese Fensterrahmen bieten gleichzeitig die Windows-typischen Bedienelemente zum Verschieben der einzelnen Fenster auf dem Desktop und zum Verändern der Größe der Videos.

Die Bedienoberflächensoftware muß die Einhaltung der oben genannten geometrischen Randbedingungen und der VRAM-Überdeckungsfläche sicherstellen oder ggf. die VRAM-Überdeckungsfläche an die vom Anwender vorgegebene Fensterkonfiguration anpassen. Wahlweise sollte die Oberfläche die Mehrfachoverlays in ein Multi-Document-Interface (MDI, wie z.B. bei Winword-Dokumenten) einbetten oder aus einzelnen Single-Document-Interface-Fenstern (SDI) zusammengesetzt sein.

## Patentansprüche

1. Verfahren zur simultanen Einblendung von digitalen Videos (D1, D2, D3,...) jeweils eines Videokanals (K1, K2, K3,...) auf einem Monitor einer DV-Anlage an Einblendepositionen, die für jedes Video (D1, D2, D3,...) jeweils festgelegt sind, unter Verwendung eines physikalischen Videokanals (2), eines Overlay-Controllers (OVL) zum Transformieren des Formats eines jeweils darzustellenden Videos (D1, D2, D3,...) und zum Einschreiben von Bilddaten des jeweiligen Videos (D1, D2, D3,...) in einen Videospeicher (3) und eines Anzeigesteuerelements zum Auslesen von Bilddaten aus dem Videospeicher und Anzeigen der Bilddaten an einer jeweils festgelegten Position des Monitors, **gekennzeichnet durch** die Schritte von:
- sequentiell aufeinanderfolgendes Einleiten (MUX) von Videosequenzen (S1, S2, S3,...) alternierend aus den verschiedenen Videokanälen (K1, K2, K3,...) in den einen physikalischen Videokanal (2);
- Zwischenspeichern des Datenstroms des physikalischen Videokanals (2) in den einen Zwischenspeicher (FIFO) und
- Einleiten des Datenstroms aus dem Zwischenspeicher in den einen Overlay-Controller (OVL).

2. Verfahren nach Anspruch 1, **gekennzeichnet durch** Decodieren des Datenstroms des einen physikalischen Videokanals (2), bevor der Datenstrom in den Overlay-Controller (OVL) geleitet wird.

3. Verfahren nach Anspruch 1 oder 2 zur Erhöhung der durch den physikalischen Videokanal (2) übertragenen Informationsdichte, **dadurch gekennzeichnet**, daß das sequentiell aufeinanderfolgendes Einleiten (MUX) von Videosequenzen (S1, S2, S3,...) mit einer erhöhten Bildfrequenz durchgeführt wird.

4. Schaltungsanordnung zur Durchführung des Verfahrens nach Anspruch 1 mit einem Overlay-Controller (OVL) und einem nachfolgenden Videospeicher mit Zugriff für einen Monitor zum gleichzeitigen Darstellen der mehreren Videos (D1, D2, D3,...) an Positionen, die für jedes Video (D1, D2, D3,...) jeweils festgelegt sind, **gekennzeichnet durch**
- einen Multiplexer (MUX) zum sequentiell aufeinanderfolgenden Einleiten von Videosequenzen (S1, S2, S3,...) alternierend aus den verschiedenen Videokanälen (K1, K2, K3,...) in einen physikalischen Videokanal (2);
- den einen einzigen physikalischen Videokanal (2);
- einen einzigen Zwischenspeicher (FIFO) für den Datenstrom des physikalischen Videokanals (2) und
- einen einzigen Overlay-Controller (OVL).

5. Schaltungsanordnung nach Anspruch 4, **gekennzeichnet durch** einen vor den Overlay-Controller (OVL) geschalteten Decoder (DEC).

6. Schaltungsanordnung nach Anspruch 4 oder 5 zur Erhöhung der durch die alternierende Übertragung der Videos verminderte Bildwiederholfrequenz, **dadurch gekennzeichnet**, daß der Multiplexer (MUX) mit einer erhöhten Bildfrequenz betrieben wird.
